# EUROPÄISCHE PATENTANMELDUNG

(11) **EP 0 823 319 A1**
(43) Veröffentlichungstag der Anmeldung: **11.02.1998**
(21) Anmeldenummer: 97111920.1
(22) Anmeldetag: 14.07.1997
(51) Int. Cl.: B29C 47/92

(54) **Verfahren zur Regelung der Foliendicke an einer Blasfolienanlage**

(30) Priorität: 05.08.1996 DE 19631640
(71) Anmelder: Windmöller & Hölscher, D-49525 Lengerich (DE)
(72) Erfinder: Sensen, Klemens, 49525 Lengerich (DE); Avermeyer, Ansgar, 49124 Georgsmarienhütte (DE)

(57) **Zusammenfassung**

Zur Regelung der Foliendicke an einer Blasfolienextruderanlage mit reversierendem oder drehendem Abzug des Folienschlauches (2) wird das Dickenprofil des aufgeblasenen Folienschlauchs (2) über dessen Umfang gemessen. Die Sektoren des Folienschlauches können mit unterschiedlichen Temperaturen durch in einen mit Stellgliedern versehenen Temperiersektoren aufgeteilten Düsenring oder durch den extrudierten Schlauch ringförmig einfassende und mit Stellgliedern versehene Temperierelemente beaufschlagt werden. Um das gemessene Dickenprofil lagerichtig den Temperiersektoren des Düsenrings bzw. den Temperierelementen zuordnen zu können, wird der extrudierte Folienschlauch im Bereich des Düsenrings bzw. der Temperierelemente mit einer Markierung versehen und die Drehung dieser Markierung wird im vorbestimmten Abstand von dem Düsenring bzw. den Temperierelementen durch eine Meßeinrichtung (5) erfaßt.

## Beschreibung

Die Erfindung betrifft ein Verfahren zur Regelung der Foliendicke an einer Blasfolienextruderanlage mit reversierendem oder drehendem Abzug des Folienschlauches, mit einer das Dickenprofil des aufgeblasenen Folienschlauches über dessen Umfang messenden Einrichtung, mit einem in mit Stellgliedern versehenen Temperiersektoren aufgeteilten Düsenring oder mit den extrudierten Folienschlauch ringförmig einfassenden Temperierelementen, die Sektoren des Folienschlauches mit unterschiedlichen Temperaturen beaufschlagen können, bei dem das gemessene Dickenprofil winkelgerecht dem Düsenring oder den Temperierelementen zugeordnet wird.

Trotz hochentwickelter Technik zur Einregelung von im Blasverfahren hergestellten Schlauchfolien auf die mittlere Foliendicke, lassen sich im Toleranzbereich liegende Dick- und Dünnstellen der Schlauchfolie nicht vermeiden, die sich beim Aufwickeln der flachgelegten Schlauchfolie in der Wickelrolle derart überlagern, daß sich entsprechend den Dick- und Dünnstellen Wülste und Täler in der Wickelrolle ergeben. Um einen zylindrischen Wickel zu erhalten, werden die im Blasverfahren hergestellten Schlauchfolien daher durch die abziehenden Flachlegewalzen bis zu 360° reversierend oder auch rotierend abgezogen, so daß sich die Dick- und Dünnstellen auf der Wickelrolle nach der Art des Seilwickelns verteilen.

Um gemessene Dick- und Dünnstellen der Schlauchfolie auszuregeln, ist es bekannt, den Düsenring des Folienblaskopfes in Temperiersektoren zu unterteilen oder den extrudierten Folienschlauch ringförmig einfassende Temperierelemente vorzusehen, durch die gemessene Dickstellen erwärmt und/oder gemessene Dünnstellen gekühlt werden, so daß eine Einregelung und Annäherung an die mittlere Foliendicke erfolgt.

Da die Messung des Dickenprofils des extrudierten Folienschlauches oberhalb der sog. Frostlinie, also in einem Bereich erfolgt, der von den Temperiersektoren bzw. den Temperierelementen entfernt ist, ist es ein besonderes Problem, die gemessenen Dick- und Dünnstellen lagerichtig bzw. winkelgerecht dem Düsenring bzw. den Temperierelementen zuzuordnen, um die erforderliche Temperierbeeinflussung an den gemessenen Dick- oder Dünnstellen vornehmen zu können.

In der DE-PS 29 47 293 ist für ein Verfahren der eingangs angegebenen Art angegeben worden, daß die erforderliche Rückdrehung des gemessenen Dickenprofils zur lagerichtigen Zuordnung der gemessenen Foliensektoren zu den Sektoren des Düsenrings, aus denen diese extrudiert worden sind, rechnerisch oder durch entsprechende Drehung und Verdrehung der Meßeinrichtungen erfolgen könne. Diese rechnerische Rückdrehung führt aber nicht immer zum Erfolg, da die Verdrallung der Folie durch den Kalibrierkorb und die mit den Abzugswalzen rotierenden Flachlegeplatten, an denen die Folie aufgrund Ihrer Klebrigkeit haftet, beeinflußt wird.

Aufgabe der Erfindung ist es daher, ein Verfahren der eingangs angegebenen Art zu schaffen, mit dem sich unter Berücksichtigung der Haftung der Schlauchfolie an den Flachlegeplatten, den Abzugswalzen und, falls vorhanden, an der Kalibriereinrichtung das gemessene Dickenprofil lagerichtig den Temperiersektoren des Düsenrings bzw. den Temperierelementen zuordnen läßt.

Erfindungsgemäß wird diese Aufgabe dadurch gelöst, daß der extrudierte Folienschlauch im Bereich des Düsenrings bzw. der Temperierelemente mit einer Markierung versehen und der Drehwinkel dieser Markierung vor der Abzugseinrichtung bzw. vor von mit dieser rotierenden Flachlegeplatten im vorbestimmten Abstand von dem Düsenring bzw. den Temperierelementen durch eine Meßeinrichtung erfaßt wird.

Der Meßeinrichtung, bei der es sich grundsätzlich um die das Dickenprofil der Schlauchfolie zu messenden Einrichtung handeln wird, erfaßt den Drehwinkel der Markierung, so daß sich das gemessene Dickenprofil unter Berücksichtigung der Abzugsgeschwindigkeit, der Geschwindigkeit der Reversierung oder Drehung, der Verstrieckung des Folienschlauches und des Abstandes der Meßeinrichtung von dem Düsenring bzw. den Temperierelementen die gemessenen Foliensektoren winkelrichtig dem Düsenring bzw. den Temperierelementen zuordnen lassen.

Ist ein mit der Abzugsvorrichtung bzw. den Flachlegeplatten mitrotierender Kalibrierkorb vorgesehen, ist bei der Rückdrehung des gemessenen Dickenprofils zu berücksichtigen, daß der Folienschlauch an der Kalibriervorrichtung so stark heftet, daß in dessen Bereich praktisch keine Verdrallung erfolgt.

Nach einer zweiten Ausführungsform der Erfindung wird die Aufgabe dadurch gelöst, daß das Dickenprofil der Schlauchfolie durch zwei im vorbestimmten Abstand voneinander angeordneten Meßeinrichtungen im vorbestimmten Abstand von dem Düsenring erfaßt wird. Aus dem Drehwinkel der Schlauchfolie zwischen den beiden Meßeinrichtungen, dem Abstand dieser Meßeinrichtungen voneinander und von dem Düsenring bzw. den Temperierelementen und der Abzugsgeschwindigkeit sowie der reversierenden oder kontinuierlichen Drehung läßt sich die lagerichtige Zuordnung der gemessenen Foliensektoren zu dem Düsenring bzw. zu den Temperierelementen vornehmen.

Ein Ausführungsbeispiel der Erfindung wird nachstehend anhand der Zeichnung näher erläutert. In dieser zeigt
- Fig. 1: die Messung des Verdrallwinkels des aufgeblasenen Folienschlauches in einer Blasfolienextruderanlage mit einer reversierenden Abzugsvorrichtung ohne Kalibrierkorb in schematischer Darstellung,
- Fig. 2: die Messung des Verdrallwinkels des aufgeblasenen Folienschlauches in einer der Fig. 1 entsprechenden Blasfolienextruderanlage, die jedoch mit einem mit den Flachlegeplatten mitreversierenden Kalibrierkorb versehen ist, und
- Fig. 3: die Messung des Verdrallwinkels des aufgeblasenen Folienschlauches in einer Blasfolienextruderanlage nach Fig. 1 mit zwei das Dickenprofil messenden Meßeinrichtungen.

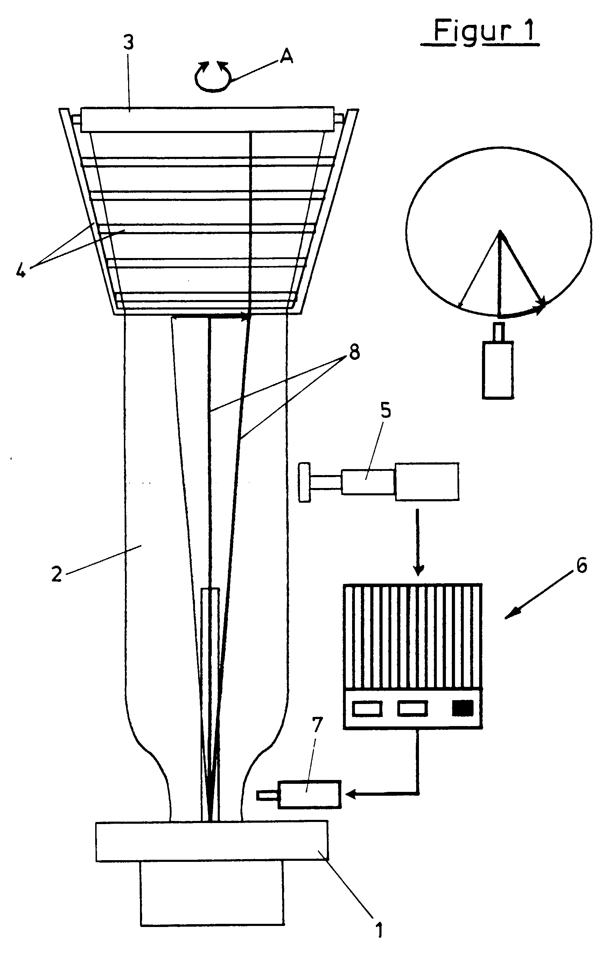

Bei dem Ausführungsbeispiel nach Fig. 1 wird aus dem ringförmigen Düsenspalt des üblichen und daher nicht näher erläuterten Folienblaskopfes 1 ein Kunststoffschlauch extrudiert, der zu einem Folienschlauch 2 unter Querreckung aufgeblasen, durch Abzugswalzen 3 unter Längsreckung abgezogen und durch ein Paar von Flachlegeplatten 4 in Richtung auf den Walzenspalt der Abzugswalzen 3 zunehmend flachgelegt wird. Der Abzug des Folienschlauches 2 erfolgt reversierend um einen Winkel bis zu 360°, wie durch den gebogenen Doppelpfeil A angedeutet ist. Zur Messung des Dickenprofils des aufgeblasenen Folienschlauches 2 ist ein stationäre Meßeinrichtung 5, vorzugsweise eine optische Meßeinrichtung, vorgesehen, die ihre Meßsignal zur Verarbeitung einem elektronischen Rechner 6 zuführt. Weiterhin ist dicht oberhalb des Düsenrings des Folienblaskopfes 1 eine stationäre Einrichtung 7 zum Anbringen einer Markierung an den extrudierten Folienschlauch vorgesehen, die beispielsweise gekühlte Luft auf den Folienschlauch bläst, wodurch künstlich eine Dickstelle erzeugt, die dann die Meßeinrichtung 5 erfaßt.

Bei einem nicht reversierenden Abzug würde die künstlich aufgebrachte Markierung längs der Linie 8 parallel zur Mittelachse des extrudierten Folienschlauches 2 zu den Abzugswalzen verlaufen. Erfolgt jedoch ein drehender oder ein reversierender Abzug, wandert die Markierung unter einem Winkelversatz auf der Linie 8' zu den Abzugswalzen 3, wobei angenommen wird, daß eine weitere Verdrallung im Bereich der Flachlegeplatten 4 wegen der Haftung der Schlauchfolie an den Flachlegeplatten nicht mehr erfolgt.

Die Meßeinrichtung 5 erfaßt den Umfangswinkel zwischen der gedachten Null-Linie 8 und der gemessenen Markierung auf der Linie 8'.

Der Rechner 6 errechnet sodann aus dem Umfangswinkel, der Abzugsgeschwindigkeit der Schlauchfolie, der Höhe der Meßeinrichtung 5 über dem Folienblaskopf und dem aktuellen Reversierungswinkel den Winkelversatz der Meßstelle gegenüber den Temperiersektoren des Düsenrings oder den Temperierelementen, so daß zur sektorenrichtigen Beeinflussung der Temperiersektoren bzw. der Temperierelemente durch den Rechner 6 eine entsprechende Rückdrehung erfolgt.

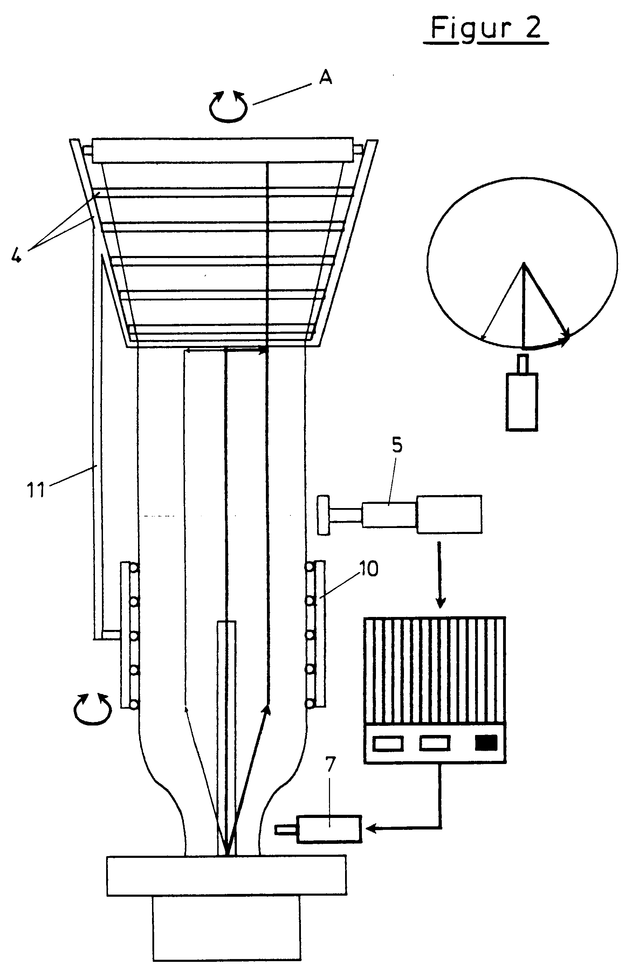

Bei dem Ausführungsbeispiel nach Fig. 2 ist ein Kalibrierkorb 10 vorgesehen, der über einen Träger 11 mit dem die Flachlegeplatten 4 tragenden Geste verbunden ist, so daß der Kalibrierkorb starr mit den Flachlegeplatten verbunden ist und mit disen reversiert. Die Messung des Verdrehwinkels erfolgt in der grundsätzlich gleichen Weise wie nach dem Ausführungsbeispiel der Fig. 1. Bei dem Ausführungsbeispiel nach Fig. 2 ist jedoch zu berücksichtigen, daß der Kalibrierkorb 10 aufgrund der an diesem haftenden Schlauchfolie diese mitnimmt und im wesentlihcen keine Verdrallung der Schlauchfolie im Bereich und oberhalb des Kalibrierkorbs 10 zuläßt so daß der gemessene Verdrallungswinkel dem Verdrallungswinkel entspricht, der sich bei Einlauf der Schlauchfolie in den Kalibrierkorb 10 einstellt, so daß statt der Höhe der Meßeinrichtung über dem Düsenring bzw. den Temperierelementen nur deren Abstand bis zu dem Kalibrierkorb 10 zu berücksichtigen ist.

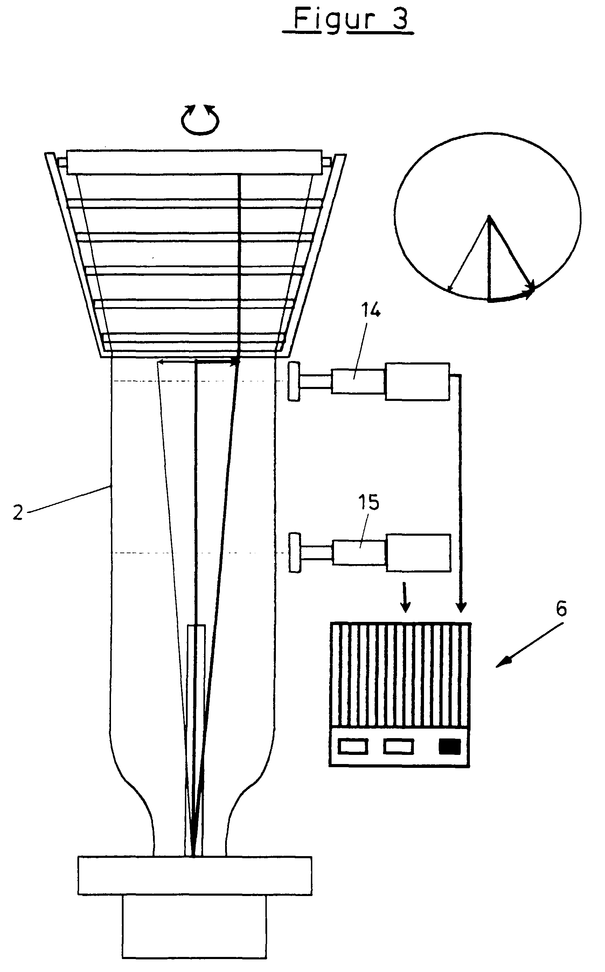

Bei dem Ausführungsbeispiel nach Fig. 3 ist kein Kalibrierkorb vorhanden. Weiterhin wird auf eine Markierung der Folie verzichtet. Zur Messung des Dickenprofils der aufgeblasenen Schlauchfolie 2 sind im vorbestimmten Abstand voneinander zwei Meßeinrichtungen 14, 15 vorgesehen. Da sich das Dickenprofil der aufgeblasenen Schlauchfolie zwischen den Meßeinrichtungen 14, 15 nicht mehr verändert, läßt sich aus einem Vergleich dieser Dickenprofile der Drehwinkel der Schlauchfolie ermitteln, den diese auf ihrer konstanten Laufstrecke zwischen den Meßeinrichtungen 14, 15 erfährt. Aus diesem Drehwinkel sowie dem Abstand der Meßeinrichtungen 14, 15 über dem Düsenring, der Abzugsgeschwindigkeit und dem momentanen Reversierwinkel läßt sich der jeweilige Verdrallwinkel gegenüber dem Düsenring bzw. den Temperierelementen durch den Rechner 6 ermitteln, so daß die erforderliche Rückdrehung vorgenommen werden kann, um die Temperiersektoren bzw. Temperierelementen entsprechend dem gemessenen Dickenprofil beeinflussen zu können.

## Patentansprüche

1. Verfahren zur Regelung der Foliendicke an einer Blasfolienextruderanlage
mit reversierendem oder drehendem Abzug des Folienschlauches,
mit einer das Dickenprofil des aufgeblasenen Folienschlauchs über dessen Umfang messenden Einrichtung,
mit einem in mit Stellgliedern versehenen Temperiersektoren aufgeteilten Düsenring oder mit den extrudierten Folienschlauch ringförmig einfassenden und mit Stellgliedern versehenen Temperierelementen, die Sektoren des Folienschlauches mit unterschiedlichen Temperaturen beaufschlagen können, bei dem das gemessene Dickenprofil winkelgerecht den Temperiersektoren des Düsenrings oder den Temperierelemtenen zugeordnet wird,
dadurch gekennzeichnet,
daß der extrudierte Folienschlauch im Bereich des Düsenrings bzw. der Temperierelemente mit einer Markierung versehen und die Drehung dieser Markierung im vorbestimmten Abstand von dem Düsenring bzw. den Tempierelementen durch eine Meßeinrichtung erfaßt wird.

2. Verfahren nach dem Oberbegriff des Patentanspruchs 1, dadurch gekennzeichnet, daß das Dickenprofil der Schlauchfolie durch zwei im vorbestimmten Abstand voneinander angeordneten Meßeinrichtungen vor Abzugseinrichtung bzw. vor von mit dieser rotierenden Flachlegeplatten im vorbestimmten Abstand von dem Düsenring bzw. den Temperierelementen gemessen wird.
